# EUROPEAN PATENT SPECIFICATION

(11) **EP 2 314 896 B1**
(45) Date of publication and mention of the grant of the patent: **14.03.2012**
(21) Application number: 10188128.2
(22) Date of filing: 20.10.2010
(51) Int. Cl.: F16H 9/18, F16H 55/56, F16G 5/16

(54) **Continuously variable transmission and saddle ride-type vehicle**
Stufenloses Getriebe und Grätschsitzfahrzeug
Transmission variable continue pour véhicules de type à enfourcher

(30) Priority: 21.10.2009 JP 2009242272; 01.09.2010 JP 2010195532
(43) Date of publication of application: 27.04.2011
(73) Proprietor: Yamaha Hatsudoki Kabushiki Kaisha, Iwata-shi, Shizuoka 438-8501 (JP)
(72) Inventor: Nogi, Sadao, Iwata-shi Shizuoka 4388501 (JP); Yoshida, Norikazu, Iwata-shi Shizuoka 4388501 (JP)
(74) Representative: Grünecker, Kinkeldey, Stockmair & Schwanhäusser

(56) References cited:
- EP-A2- 1 878 948
- WO-A1-2009/031277
- DE-A1- 2 652 938
- JP-A- 2002 031 215
- JP-A- 2004 028 284

## Description

The present invention relates to a continuously variable transmission according to the preamble of claim 1. Such a continuously variable transmission is known from JP 2004 028284 A.

The belt-type continuously variable transmissions (belt-type CVTs) have a structure that a V-belt is wrapped around a drive pulley and a driven pulley. Further, some of the belt-type CVTs include a V-belt of a type that contact portions with the drive and driven pulleys are formed by a plurality of resin blocks.

For example, Japan Laid-open Patent Application Publication No. JP-A-2008-039177 describes a CVT including a V-belt formed by connecting a plurality of resin blocks with an endless coupling member. The V-belt is wrapped around a primary sheave and a secondary sheave. Further, each of the primary and secondary sheaves is formed by a pair of sheave members. A plurality of grooves is formed on a surface of each of the sheave members of the primary and secondary sheaves. The grooves are radially aligned at predetermined pitches. The grooves reduce the abrasion amount of the V-belt and prolong duration of the CVT.

However, a drawback is produced when each of the pulleys includes the grooves on the surface thereof making contact with the V-belt as seen in the aforementioned CVT. Simply put, chances are high that stick-slip sounds are produced when the V-belt, fitted to the pulley, is released from the pulley. The stick-slip sounds make a rider feel uncomfortable.

The inventors of the present invention conducted research for finding a cause of production of stick-slip sounds and concluded the cause as follows.

When grooves are formed on the surface of each pulley, the resin blocks of the V-belt are likely to get tangled in the pulleys. The resin blocks get tangled with the surfaces of the pulleys while the V-belt is fitted to the pulleys. The resin blocks are thereby deformed. When the V-belt is released from the pulley, however, the resin blocks are released from the tangled state. Then the resin blocks are rubbed against the surfaces of the pulleys while the resin blocks are restored to a normal shape from the deformed shape caused in getting tangled with the surfaces of the pulleys. Stick-slip sounds are produced when friction thus occurs between the resin blocks and the surfaces of the pulleys. Stick-slip sounds are produced every time a plurality of the resin blocks is released from the pulleys. Therefore stick-slip sounds are repeatedly produced by the driving of the belt.

Further, when the CVT is driven for a long period of time, the resin blocks are abraded and accordingly shaped to be matched with the shapes of the surfaces of the pulleys. In this case, contact areas are increased between the lateral surfaces of the V-belt and the surfaces of the pulleys. Accordingly, contact pressures are reduced between the lateral surfaces of the V-belt and the surfaces of the pulleys. Under the condition that the contact pressures are reduced, chances are high that stick-slip sounds are produced when the lateral surfaces of the V-belt make contact with the surfaces of the pulleys as described above.

Further, when the reduction ratio of the CVT is maximized, a portion of the V-belt, wrapped on the driven pulley, has the maximum diameter. In this case, a contact portion with the surface the pulley in the V-belt has a length greater than that in the case at a lower reduction ratio. Contact areas are accordingly increased between the lateral surfaces of the V-belt and the surface of the pulley. In other words, contact pressures are reduced between the lateral surfaces of the V-belt and the surface of the pulley. Consequently, chances are high that stick-slip sounds are produced at the driven pulley when the reduction ratio of the CVT is thus maximized. In addition, the engine speed is low when the reduction ratio of the CVT is maximized. Under the condition, a rider has high chances of hearing stick-slip sounds. Accordingly, a rider may feel uncomfortable because of stick-slip sounds.

It is an object of the present invention to provide a continuously variable transmission and a saddle ride-type vehicle for inhibiting a rider's uncomfortable feeling to be aroused by stick-slip sounds.

A continuously variable transmission according to an embodiment of the present invention includes the features of claim 1.

According to the embodiment of the present invention, the contact areas are reduced between the surfaces of the driven pulley and the resin blocks of the V-belt at the maximum reduction ratio. Accordingly, contact pressure is increased between the surfaces of the driven pulley and the resin blocks. Accordingly, stick-slip sounds are inhibited from being produced in the driven pulley at the maximum reduction ratio. Further, the continuously variable transmission is set to be in a low speed state at the maximum reduction ratio. As seen in an idling state, the engine speed is lowered when the continuously variable transmission is set to be in a low speed state. According to the aspect of the present invention, stick-slip sounds are inhibited from being produced in a situation in which a rider can easily hear stick-slip sounds. It is consequently possible to inhibit a rider's uncomfortable feeling to be aroused by stick-slip sounds.

FIG. 1 is a side view of a motorcycle according to an exemplary embodiment of the present invention;
FIG. 2 is a cross-sectional view of an engine unit embedded in the motorcycle;
FIGS. 3A and 3B are diagrams illustrating a surface of an immovable pulley member of a drive pulley;
FIGS. 4A and 4B are diagrams illustrating a surface of an immovable pulley member of a driven pulley;
FIG. 5 is a side view of a V-belt;
FIG. 6 is a cross-sectional view of the V-belt sectioned along a line VI-VI in FIG. 5;
FIGS. 7A and 7B are diagrams illustrating a speed change operation of a continuously variable transmission;
FIG. 8 is a chart representing a relation between the engine speed and the vehicle speed;
FIG. 9 is a cross-sectional view of the driven pulley and the V-belt at the maximum reduction ratio;
FIG. 10 is a cross-sectional view of the driven pulley and the V-belt under a condition that a clutch is completely engaged;
FIG. 11 is a cross-sectional view of the drive pulley and the V-belt at the maximum reduction ratio; and
FIG. 12 is a chart representing a relation between the engine speed and the vehicle speed in a motorcycle according to another exemplary embodiment.

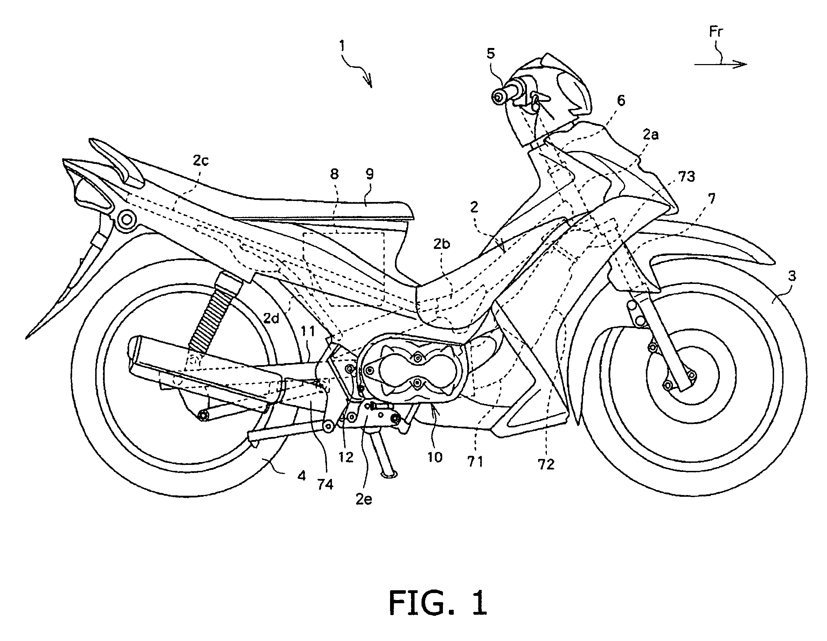

An exemplary embodiment of the present invention will be hereinafter explained with reference to attached figures. FIG. 1 is a side view of a motorcycle 1 according to the exemplary embodiment of the present invention. Unless particularly limited, directional terms (e.g., front, rear, right, left, and their related terms) refer to directions seen from a rider riding on a seat 9 of the motorcycle 1 in the following explanation.

As illustrated in FIG. 1, the motorcycle 1 includes a vehicle body frame 2, an engine unit 10, a front wheel 3, and a rear wheel 4.

The vehicle body frame 2 includes a head pipe 2a, a main frame 2b, a rear frame 2c, a stay 2d, and a bracket 2e. The head pipe 2a is disposed in the front end of the vehicle body frame 2. The head pipe 2a supports a steering shaft 6 for allowing the steering shaft to revolve. A handle 5 is connected to the upper end of the steering shaft 6. The steering shaft 6 is thereby configured to revolve together with the handle 5. Further, a front fork 7 is connected to the lower end of the steering shaft 6. The front fork 7 supports the front wheel 3 with the lower end thereof for allowing the front wheel 3 to rotate.

The front end of the main frame 2b is connected to the head pipe 2a. The main frame 2b is extended from the front end thereof towards the rear portion of the vehicle. Specifically, the main frame 2b is extended obliquely downwards from the front end thereof. The rear end of the main frame 2b is positioned forwards of the rear wheel 4. The front end of the rear frame 2c is connected to the middle of the main frame 2b. The rear frame 2c is extended from the front end thereof towards the rear portion of the vehicle. Specifically, the rear frame 2c is extended obliquely upwards from the front end thereof. A container case 8 and the seat 9 are disposed over the rear frame 2c. The rear frame 2c supports the container case 8 and the seat 9. The front end of the stay 2d is connected to the rear end of the main frame 2b. The stay 2d is extended from the front end thereof towards the rear portion of the vehicle. Specifically, the stay 2d is extended obliquely upwards from the front end thereof. The upper end of the stay 2d is connected to the middle of the rear frame 2c.

The bracket 2e is a plate-shaped member joined to the rear end of the main frame 2b. The front end of a rear arm 11 is attached to the top of the bracket 2e through a pivot shaft 12. The rear arm 11 is extended rearwards (i.e., in a direction opposite to a direction depicted by an arrow Fr in FIG. 1) from the pivot shaft 12. The rear arm 11 supports the rear wheel 4 with the rear end thereof for allowing the rear wheel 4 to rotate. The rear arm 11, together with the rear wheel 4, is configured to pivot up and down about the pivot shaft 12. The rear arm 11 is configured to pivot independently from the engine unit 10.

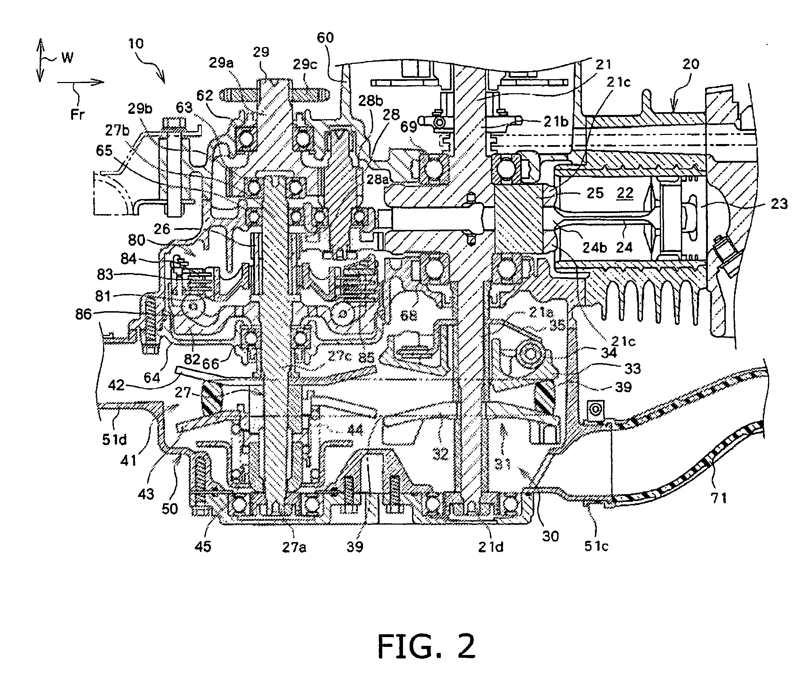

The engine unit 10 is supported by the vehicle body frame 2. The engine unit 10 is disposed under the main frame 2b while being disposed forwards of the rear wheel 4. As illustrated in FIG. 2, the engine unit 10 includes an engine 20, a driven shaft 27, an output shaft 29, a continuously variable transmission 30 (hereinafter referred to as "the CVT 30"), and a clutch 80.

The engine 20 includes a crankshaft 21 (i.e., a drive shaft), a cylinder 22, a piston 23, and a crankcase 60. The cylinder 22 is disposed forwards (i.e., in a direction depicted by the arrow Fr in FIG. 2) of the crankcase 60. The cylinder 22 is disposed in a slightly slanted posture. Accordingly, the front portion of the cylinder 22 is positioned higher than the rear portion thereof. The piston 23 is configured to reciprocate within the cylinder 22 when mixture of air and fuel is introduced to and burnt in the cylinder 22. The piston 23 is coupled to a crankpin 25 disposed in the crankshaft 21 through a connecting rod 24. The crankshaft 21 is configured to convert the reciprocating motion of the piston 23 into rotation. The rotation is then outputted to the CVT 30.

The crankshaft 21 is disposed within the crankcase 60 along a transverse direction (i.e., either of directions depicted by a bidirectional arrow W). The crankshaft 21 includes a right shaft portion 21 a, a left shaft portion 21b, and a pair of crank arms 21 c, 21 c. One of the crank arms 21 c, 21 c is extended from the base of the right shaft portion 21 a in a radial direction (i.e., a direction perpendicular to an axial center line of the right shaft portion 21a), whereas the other of the crank arms 21c, 21c is extended from the base of the left shaft portion 21b in a radial direction (i.e., a direction perpendicular to an axial center line of the left shaft portion 21b). The crank arms 21c, 21c support the crankpin 25 for allowing the crankpin 25 to rotate.

The base of the left shaft portion 21 b is supported by the crankcase 60 through a bearing 69. The left shaft portion 21b is extended leftwards (i.e., transversely upwards in FIG. 2) from the base thereof. A power generator (not illustrated in the figure) is disposed onto the left shaft portion 21b.

On the other hand, the base of the right shaft portion 21 a is supported by the crankcase 60 through a bearing 68. The right shaft portion 21 a is extended rightwards (i.e., transversely downwards in FIG. 2) from the base thereof. A drive pulley 31 of the CVT 30 is disposed onto the right shaft portion 21a. An end 21d of the right shaft portion 21a is supported by a transmission casing 50 to be described.

The driven shaft 27 is backwardly separated from the crankshaft 21. The driven shaft 27 is disposed along the transverse directions of the vehicle. A driven pulley 41 of the CVT 30 to be described and the clutch 80 are disposed onto the driven shaft 27. A right end 27a of the driven shaft 27 is supported by the transmission casing 50. A bearing 65 and a bearing 63 are fitted onto a left end 27b of the driven shaft 27. An outer ring of the bearing 65 is supported by the crankcase 60. The crankcase 60 supports the left end 27b of the driven shaft 27 through the bearing 65. The bearing 63 is positioned on the left of the bearing 65.

A bearing 66 is fitted onto a center portion 27c of the driven shaft 27. An outer ring of the bearing 66 is supported by a partition member 64 fixed to the crankcase 60. The crankcase 60 supports the center portion of the driven shaft 27 through the partition member 64 and the bearing 66.

The output shaft 29 is transversely aligned with the driven shaft 27. Specifically, the output shaft 29 is positioned on the left of the driven shaft 27. The output shaft 29 is fitted onto an outer ring of the bearing 63. Thus, the bearing 63 supports the output shaft 29. A center portion 29a of the output shaft 29 is supported by the crankcase 60 through a bearing 62. Further, a sprocket 29c, wrapping a chain (not illustrated in the figure) thereon, is disposed onto the output shaft 29.

The CVT 30 is a belt-type continuously variable transmission including the drive pulley 31, the driven pulley 41, a V-belt 39, and the transmission casing 50.

The drive pulley 31 is disposed onto the right shaft portion 21a of the crankshaft 21. The drive pulley 31 includes an immovable pulley member 32, a movable pulley member 33, and a plate 35. The immovable pulley member 32 and the plate 35 are prevented from axially moving. Specifically, the immovable pulley member 32 and the plate 35 are prevented from moving in the axial direction of the crankshaft 21. In contrast, the movable pulley member 33 is allowed to axially move between the immovable pulley member 32 and the plate 35. Specifically, the movable pulley member 33 is allowed to move in the axial direction of the crankshaft 21. The movable pulley member 33 is axially faced to the immovable pulley member 32. A belt groove is formed between the movable pulley member 33 and the immovable pulley member 32 for disposing the V-belt 39 thereon. The front portion of the V-belt 39 is wrapped around the movable pulley member 33 and the immovable pulley member 32. In each of the immovable and movable pulley members 32, 33, a contact surface with the V-belt 39 (hereinafter simply referred to as "the surface") has a slanted shape with respect to a radial direction of the drive pulley 31 (i.e., a direction perpendicular to the axis of the drive pulley 31). Accordingly, the width of the belt groove is increased in a radial outward direction of the drive pulley 31.

A weight roller 34 is disposed between the movable pulley member 33 and the plate 35. The weight roller 34 is configured to radially move by means of centrifugal force. When the crankshaft 21 is revolved, the weight roller 34 moves in a radial outward direction and accordingly presses the movable pulley member 33 towards the immovable pulley member 32. The V-belt 39 is herein pressed by the movable pulley member 33 and moved in a radial outward direction of the drive pulley 31. In the drive pulley 31, a diameter of a portion wrapping the V-belt 39 thereon is increased (the diameter will be hereinafter referred to as "the wrapping diameter for the V-belt 39"). Therefore, the reduction ratio is reduced.

Each of the immovable pulley member 32 and the movable pulley member 33 is made of aluminum or alloy partially containing aluminum. Hard chromium plating is executed for the surface of the immovable pulley member 32 and the surface of the movable pulley member 33.

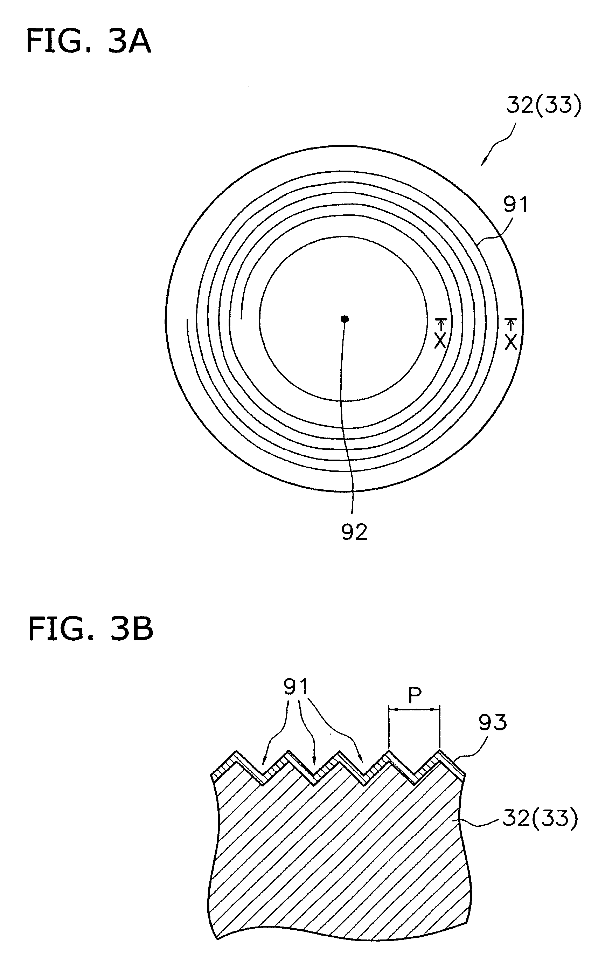

As illustrated in FIGS. 3A and 3B, each of the immovable pulley member 32 and the movable pulley member 33 includes a swirling groove 91 on the surface thereof. The grooves 91 are formed on the surface of the immovable pulley member 32 and the surface of the movable pulley member 33 in a turning cutting process. Each groove 91 is circumferentially extended while being radially aligned at predetermined pitches P. Each groove 91 swirls about an axis 92 of each of the immovable pulley member 32 and the movable pulley member 33. Because of the grooves 91, each of the immovable pulley member 32 and the movable pulley member 33 has a convexo-concave cross-section in a radial direction. As illustrated in FIG. 3B, each of the immovable pulley member 32 and the movable pulley member 33 includes a chrome plating layer 93 on the surface thereof. It should be noted that FIG. 3B illustrates the cross-section of each of the immovable pulley member 32 and the movable pulley members 33 sectioned along a line X-X in FIG. 3A.

As illustrated in FIG. 2, the driven pulley 41 is positioned rearwards of the drive pulley 31. The driven pulley 41 is disposed onto the driven shaft 27. The driven pulley 41 is configured to rotate together with the driven shaft 27 by means of torque transferred thereto through the V-belt 39. The driven pulley 41 includes an immovable pulley member 42 and a movable pulley member 43.

The immovable pulley member 42 is prevented from axially moving. Specifically, the immovable pulley member 42 is prevented from moving in the axial direction of the driven shaft 27. Further, the immovable pulley member 42 is coupled to the driven shaft 27 through a spline. The immovable pulley member 42 is thereby configured to unitarily rotate with the driven shaft 27. The immovable pulley member 42 has a diameter greater than that of the immovable pulley member 32 in the drive pulley 31.

In contrast, the movable pulley member 43 is allowed to move in the axial direction of the driven shaft 27. Further, the movable pulley member 43 is configured to rotate together with the driven shaft 27. The movable pulley member 43 is axially faced to the immovable pulley member 42. A belt groove is formed between the movable pulley member 43 and the immovable pulley member 42 for disposing the V-belt 39 thereon. The rear portion of the V-belt 39 is wrapped around the movable pulley member 43 and the immovable pulley member 42. In each of the immovable pulley member 42 and the movable pulley member 43, a contact surface with the V-belt 39 (hereinafter simply referred to as "the surface") has a slanted shape with respect to a radial direction of the driven pulley 41 (i.e., a direction perpendicular to the axis of the driven pulley 41). Accordingly, the width of the belt groove is increased in a radial outward direction of the driven pulley 41. It should be noted that the movable pulley member 43 has a diameter greater than that of the movable pulley member 33 in the drive pulley 31.

A spring support member 45 is disposed on the right of the movable pulley member 43. The spring support member 45 is a disc member. The spring support member 45 is configured to rotate together with the driven shaft 27. A spring 44 is disposed between the spring support member 45 and the movable pulley member 43. The spring support member 45 supports the spring 44 while being prevented from axially moving. When the movable pulley 33 increases the wrapping diameter for the V-belt 39 in the drive pulley 31, the movable pulley member 43 is moved away from the immovable pulley member 42 in the driven pulley 41 while resisting the urging force applied from the spring 44. The wrapping diameter for the V-belt 39 is thereby reduced in the driven pulley 41 and the reduction ratio is accordingly reduced.

Each of the immovable pulley member 42 and the movable pulley member 43 in the driven pulley 41 is made of stainless such as SUS304 defined by Japanese Industrial Standard (JIS). It should be noted that chrome plating is not executed for the surface of the immovable pulley member 42 and the surface of the movable pulley member 43. Therefore, the hardness of each surface of the driven pulley 41 is lower than that of each surface of the drive pulley 31.

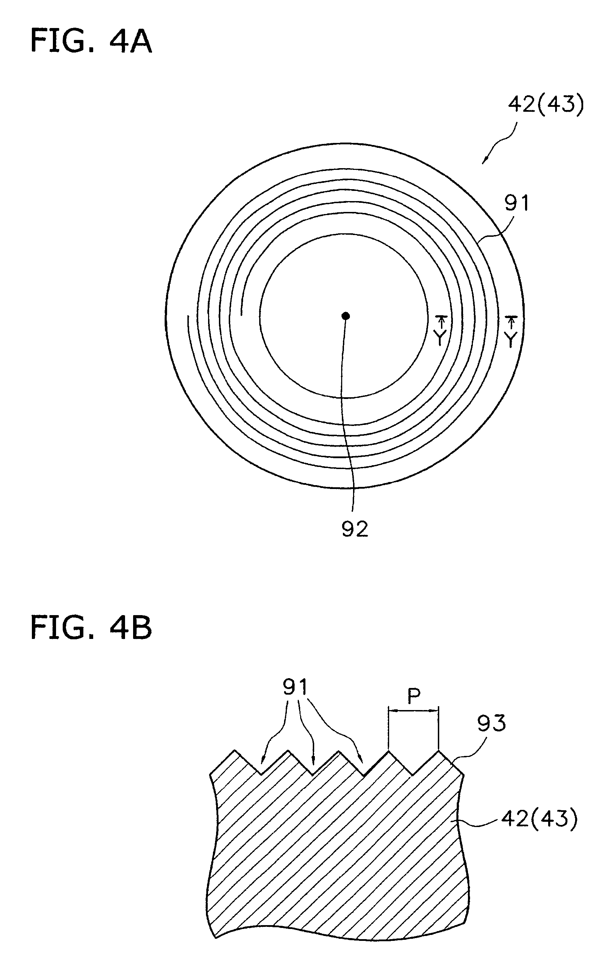

As illustrated in FIGS. 4A and 4B, the driven pulley 41 includes a swirling groove 91 on the surface thereof similarly to the drive pulley 31. Specifically, the groove 91 is formed on the surface of the immovable pulley member 42 and the surface of the movable pulley member 43 in a turning cutting process. Each groove 91 is circumferentially extended thereon while being radially aligned at predetermined pitches P. Each groove 91 swirls about an axis 92 of each of the immovable pulley member 42 and the movable pulley member 43. Because of the groove 91, each of the immovable pulley member 42 and the movable pulley member 43 has a convexo-concave cross-section in a radial direction. Unlike the drive pulley 31, the driven pulley 41 does not include the chrome plating layer 93 on the surface of the immovable pulley member 42 and the surface of the movable pulley member 43, as illustrated in FIG. 4B. It should be noted that FIG. 4B illustrates a cross-sectional view of each of the immovable pulley member 42 and the movable pulley member 43 sectioned along a line Y-Y in FIG. 4A. The surface shape of each of the immovable pulley member 42 and the movable pulley member 43 will be hereinafter explained in detail.

As illustrated in FIG. 2, the transmission casing 50 accommodates the drive pulley 31, the driven pulley 41, and the V-belt 39 in the inside thereof. The transmission casing 50 is provided with an inlet 51c and an outlet 51d. Outside air is inhaled into the transmission casing 50 through the inlet 51c, whereas air within the transmission casing 50 is exhaled through the outlet 51d. More specifically, an intake duct 71 is attached to the inlet 51c. Outside air is inhaled into the intake duct 71 through a duct tip 73 (see FIG. 1). The inhaled outside air is cleaned in an air cleaner 72 (see FIG. 1). The cleaned air is introduced into the transmission casing 50 through the intake duct 71 and the inlet 51c. On the other hand, an exhaust duct 74 (see FIG. 1) is connected to the outlet 51d. Air within the transmission casing 50 is exhaled to the outside through the outlet 51d and the exhaust duct 74.

The clutch 80 is configured to selectably allow or prevent torque transmission from the driven shaft 27 to the output shaft 29. The clutch 80 is disposed on the left of the driven pulley 41. The clutch 80 includes a clutch outer member 82, a clutch inner member 81, a plurality of friction plates 83, and a plurality of clutch plates 84.

The clutch outer member 82 is configured to rotate together with the driven shaft 27. In contrast, the clutch inner member 81 is configured to rotate relative to the driven shaft 27. It should be noted that a gear 26 is herein disposed onto the driven shaft 27. The gear 26 is configured to rotate relative to the driven shaft 27, and the clutch inner member 81 is configured to rotate together with the gear 26.

The friction plates 83 and the clutch plates 84 are disc members. The friction plates 83 and the clutch plates 84 are disposed on the inside of the clutch outer member 82 while surrounding the clutch inner member 81. The friction plates 83 and the clutch plates 84 are alternately aligned one after the other in the axial direction. The friction plates 83 are configured to axially move. Further, the friction plates 83 are configured to rotate about the driven shaft 27 together with the clutch outer member 82. The inner periphery of the clutch inner member 81 meshes with the gear 26. On the other hand, the clutch plates 84 are configured to axially move. The clutch plates 84 are configured to rotate together with the clutch inner member 81.

A plurality of the friction plates 83 and a plurality of the clutch plates 84 are configured to cooperate in a mutually pressed manner. Torque is accordingly transmitted from the friction plates 83 to the clutch plates 84. The clutch 80 is an automatic clutch. The clutch 80 is configured to be selectably engaged or disengaged automatically in accordance with revolution speed of the driven shaft 27. Specifically, the clutch 80 includes a weight roller 86 and a diaphragm spring 85. The weight roller 86 is configured to rotate about the driven shaft 27 together with the clutch outer member 82. The diaphragm spring 85 is configured to axially urge the friction plates 83. A plurality of the friction plates 83 and a plurality of the clutch plates 84 are disposed between the weight roller 86 and the diaphragm spring 85. When the clutch outer member 82 increases rotation speed thereof in conjunction with increase in revolution speed of the driven shaft 27, the weight roller 86 moves in a radial outward direction by means of centrifugal force and accordingly presses the friction plates 83 towards the clutch plates 84. The clutch 80 is thereby set to be in an engaged state. In contrast, when the driven shaft 27 reduces revolution speed thereof, the weight roller 86 retracts in a radial inward direction. Accordingly, the friction plates 83 are separated from the clutch plates 84. The clutch 80 is thereby set to be in a disengaged state.

Revolution of the crankshaft 21 is transmitted to the driven shaft 27 while being reduced by the CVT 30. When the clutch 80 is set to be in an engaged state, revolution of the driven shaft 27 is transmitted to the gear 26 through the clutch 80. The gear 26 meshes with a gear 28a of an intermediate shaft 28 disposed forwards of the driven shaft 27. Further, a gear 28b is formed on the intermediate shaft 28. The gear 28b meshes with a gear 29b formed on the output shaft 29. With the structure, rotation of the gear 26 is transmitted to the output shaft 29 through the intermediate shaft 28. Further, revolution of the output shaft 29 is transmitted to the rear wheel 4 through a chain wrapped around the sprocket 29c and a sprocket (not illustrated in the figure) configured to rotate together with the rear wheel 4.

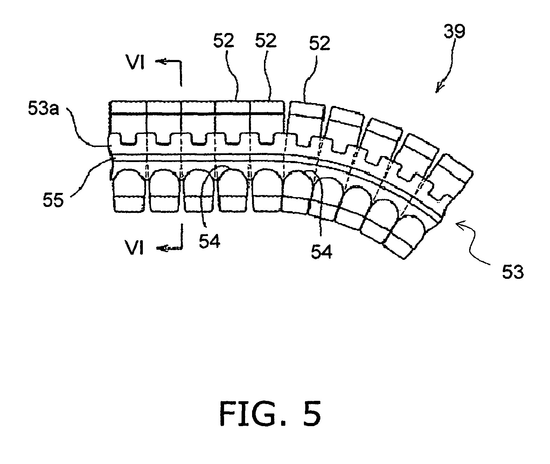

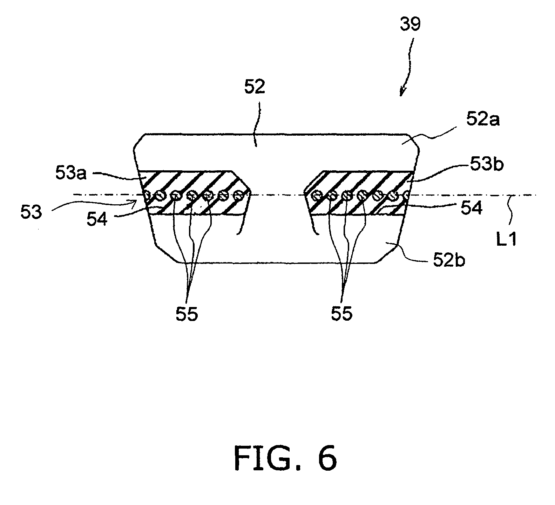

The V-belt 39 is wrapped around the drive pulley 31 and the driven pulley 41. The V-belt 39 is configured to transmit torque from the drive pulley 31 to the driven pulley 41. As illustrated in FIGS. 5 and 6, the V-belt 39 includes a plurality of resin blocks 52 and a coupling member 53.

As illustrated in FIG. 5, a plurality of the resin blocks 52 is aligned in the longitudinal direction of the coupling member 53. The resin blocks 52 are disposed on contact portions with the drive pulley 31 and the driven pulley 41 in the V-belt 39. Therefore, each resin block 52 has a roughly trapezoid shape for matching with the shape of the belt groove of the drive pulley 31 and that of the belt groove of the driven pulley 41. Specifically, the right and left lateral surfaces of each resin block 52 is slanted to be matched with the surfaces of the drive pulley 31 and first and second inner peripheral portions 42a, 43a of the driven pulley 41. Further, each resin block 52 includes an inwardly dented recess 54 on each of the right and left lateral surfaces thereof. The coupling member 53 is fitted into the recesses 54. Further, each resin block 52 includes an outer block portion 52a and an inner block portion 52b. When the resin blocks 52 make contact with the driven pulley 41, the outer block portions 52a are positioned outwards of the coupling member 53 (i.e., upwards of the coupling member 53 in FIG. 6) in the radial direction of the driven pulley 41, whereas the inner block portions 52b are positioned inwards of the coupling member 53 in the radial direction of the driven pulley 41. The right and left lateral surfaces of the coupling member 53 and the right and left lateral surfaces of the respective resin blocks 52 function as contact surfaces with the surfaces of the driven pulley 41 and the drive pulley 31.

The coupling member 53 has an annular belt shape. The coupling member 53 includes a coupling portion 53a and a coupling portion 53b. The coupling portions 53a, 53b are formed as individual separate components. Each of the coupling portions 53a, 53b has an endless shape. As illustrated in FIG. 6, the coupling portions 53a, 53b are respectively fitted into the recesses 54 of the resin blocks 52. A plurality of the resin blocks 52 is coupled to each other through the coupling portions 53a, 53b respectively thus fitted into the recesses 54 of the resin blocks 52. Each of the coupling portions 53a, 53b is made of rubber. Each of the coupling portions 53a, 53b includes a plurality of reinforcement cores 55 buried in the inside thereof.

Actions of the CVT 30 will be hereinafter explained with reference to mainly FIG. 2.

In the CVT 30, the reduction ratio is determined by a comparative relation between the force applied from the weight roller 34 for pressing the movable pulley member 33 of the drive pulley 31 to the right and the force applied from the spring 44 for pressing the movable pulley member 43 of the driven pulley 41 to the left.

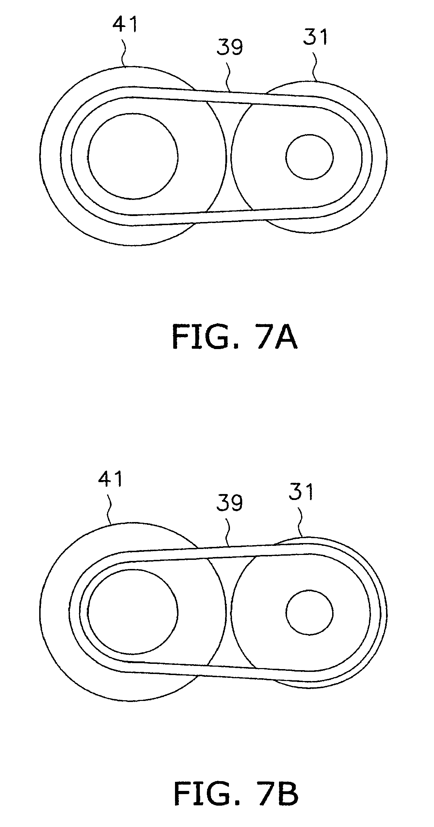

Specifically, when revolution speed of the crankshaft 21 increases, the weight roller 34 is moved in a radial outward direction by means of centrifugal force and presses the movable pulley member 33 to the right. The movable pulley member 33 is thereby moved rightwards. In other words, the wrapping diameter for the V-belt 39 is increased in the drive pulley 31. In conjunction, the wrapping diameter for the V-belt 39 is reduced in the driven pulley 41. The movable pulley member 43 of the driven pulley 41 is moved rightwards while resisting the urging force from the spring 44. Thus, the wrapping diameter for the V-belt 39 is increased in the drive pulley 31, whereas the wrapping diameter for the V-belt 39 is reduced in the driven pulley 41. Consequently, the reduction ratio is reduced (See FIG. 7B).

In contrast, when revolution speed of the crankshaft 21 reduces, the centrifugal force acting on the weight roller 34 reduces. The weight roller 34 is accordingly moved along the movable pulley member 33 in a radial inward direction. Therefore, the weight roller 34 reduces the force for pressing the movable pulley member 33 to the right. The urging force of the spring 44 relatively gets greater than the aforementioned force of the weight roller 34. The movable pulley member 43 of the driven pulley 41 is accordingly moved leftwards. In conjunction, the movable pulley member 33 of the drive pulley 31 is also moved leftwards. Consequently, the wrapping diameter for the V-belt 39 is reduced in the drive pulley 31, whereas the wrapping diameter for the V-belt 39 is increased in the driven pulley 41. Accordingly, the reduction ratio is increased (see FIG. 7A).

Based on the above, the wrapping diameter for the V-belt 39 is maximized in the driven pulley 41, whereas the wrapping diameter for the V-belt 39 is minimized in the drive pulley 31 at the lowest speed of the CVT 30 (i.e., in an idling state) as illustrated in FIG. 7A. The reduction ratio is accordingly maximized. In contrast, the wrapping diameter for the V-belt 39 is minimized in the driven pulley 41, whereas the wrapping diameter for the V-belt 39 is maximized in the drive pulley 31 at the highest speed of the CVT 30 as illustrated in FIG. 7B. The reduction ratio is accordingly minimized.

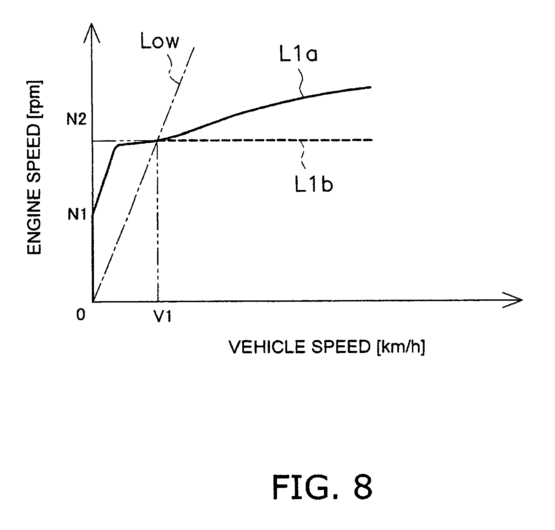

FIG. 8 represents a relation between the engine speed and the vehicle speed in the motorcycle 1 with a solid line L1a and a dashed line L1b. The solid line L1a represents a relation between the engine speed and the vehicle speed under the condition that the throttle of the engine 20 is opened at a maximum degree. On the other hand, the dashed line L1b represents a relation between the engine speed and the vehicle speed under the condition that the throttle of the engine 20 is opened at a predetermined degree less than the maximum degree. As represented in FIG. 8, the clutch 80 is kept to be in the disengaged state at an engine speed range of 0 to N1. In other words, the vehicle speed is equal to zero. When the engine speed reaches N1, the clutch 80 is started to be engaged. Therefore, the vehicle speed is gradually increased in proportion to increase in the engine speed when the engine speed is grater than or equal to N1. When the vehicle speed reaches V1, the clutch 80 is completely set to be in the engaged state from the disengaged state. In other words, the clutch 80 is set to be in a half-engaged state at a vehicle speed range of 0 to V1. It should be noted that the engine speed is equal to N2 where the vehicle speed is equal to V1. Therefore, the clutch 80 is set to be in the half-engaged state at an engine speed range of N1 to N2. When the engine speed is subsequently further increased from N2, the vehicle speed is gradually increased in proportion to increase in the engine speed. As described above, the wrapping diameter for the V-belt 39 is increased in proportion to increase in the engine speed in the drive pulley 31, whereas the wrapping diameter for the V-belt 39 is reduced in proportion to increase in the engine speed in the driven pulley 41. Consequently, the reduction ratio is reduced in proportion to increase in the engine speed. Even in a vehicle speed range of 0 to V1 where the clutch 80 is set to be in the half-engaged state, the wrapping diameter for the V-belt 39 is increased in the drive pulley 31 in proportion to increase in the engine speed, whereas the wrapping diameter for the V-belt 39 is reduced in the driven pulley 41 in proportion to increase in the engine speed. It should be noted in FIG. 8 that a dashed-dotted line "Low" represents a relation between the engine speed and the vehicle speed under a hypothetical condition that the clutch 80 is completely engaged and the reduction ratio is maximized.

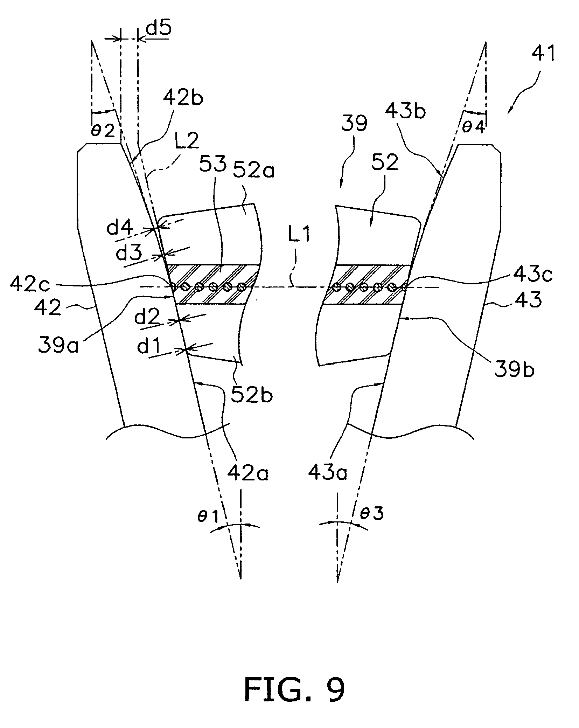

As illustrated in FIG. 9, the immovable pulley member 42 includes the first inner peripheral portion 42a and a first outer peripheral portion 42b. FIG. 9 is a cross-sectional view of the driven pulley 41 and the V-belt 39 in a plane that the axis of the driven pulley 41 is arranged thereon. Specifically, FIG. 9 partially illustrates the driven pulley 41 and the V-belt 39 at the maximum reduction ratio. It should be noted that hatching is omitted for the driven pulley 41 in FIG. 9 for easy understanding.

The first outer peripheral portion 42b is disposed radial outwards of the first inner peripheral portion 42a. The first outer peripheral portion 42b has a slanted angle θ2 greater than a slanted angle θ1 of the first inner peripheral portion 42a. With the structure, the surface of the immovable pulley member 42 is prevented from making contact at least partially with the respective resin blocks 52 when the reduction ratio is maximized, i.e., when the wrapping diameter for the V-belt 39 is maximized in the driven pulley 41. Specifically, at least a portion of each of the resin blocks 52, including the radial outward end thereof, is prevented from making contact with the surface of the immovable pulley member 42. Further specifically, the slanted angles θ1, θ2 of the surface of the immovable pulley member 42 are set for preventing the first outer peripheral portion 42b of the immovable pulley member 42 from making contact at least partially with the outer block portions 52a of the resin blocks 52 positioned around the driven pulley 41 at the maximum reduction ratio. The term "slanted angle" herein refers to an angle formed by a plane perpendicular to the axis of the immovable pulley member 42 and the surface of the immovable pulley member 42 or an angle formed by a plane perpendicular to the axis of the movable pulley member 43 and the surface of the movable pulley member 43. It should be noted that the axis of the immovable pulley member 42 corresponds to the axis of the driven shaft 27. The axis of the movable pulley member 43 also corresponds to the axis of the driven shaft 27.

Further, the first outer peripheral portion 42b is curved for gradually increasing the slanted angle θ2 in a radial outward direction, as illustrated in FIG. 9. With the shape, the first outer peripheral portion 42b of the immovable pulley member 42 is prevented from making contact with the outer block portions 52a including the radial outer ends of the rein blocks 52. Yet further, at least a contact portion with the V-belt 39 in the first inner peripheral portion 42a has a flat shape. In other words, the slanted angle θ1 is constant in at least the contact portion with the V-belt 39 in the first inner peripheral portion 42a. Therefore, the surface of the immovable pulley member 42 makes contact with the inner block portions 52b.

In FIG. 9, a distance d1 and a distance d2 are both set to be zero between the surface of the immovable pulley member 42 and the inner block portions 52b. In other words, the surface of the immovable pulley member 42 and the inner block portions 52b make contact with each other. Further, a distance d3 and a distance d4 are set to be greater than zero between the surface of the immovable pulley member 42 and the outer block portions 52a. The distance d3 represents the minimum clearance between the surface of the immovable pulley member 42 and the outer block portions 52a. In other words, the surface of the immovable pulley member 42 and the outer block portions 52a are prevented from making contact with each other. Further, a relation "d3 < d4" is herein established. In other words, distance is radial-outwardly increased between the surface of the immovable pulley member 42 and the outer block portions 52a. Further, a relation "d3 < d4 < d5" is established where a distance d5 is set as the distance between the radial outward tip of the surface of the immovable pulley member 42 and a line extended along the surface of the first inner peripheral portion 42a of the immovable pulley member 42 (see a dashed two-dotted line L2 in FIG. 9). In other words, the first outer peripheral portion 42b of the immovable pulley member 42 is curved for gradually increasing the slanted angle thereof in a radial outward direction.

The movable pulley member 43 has a surface formed symmetrical to the surface of the immovable pulley member 42 with respect to a plane including a transverse center of the driven pulley 41. The movable pulley member 43 includes the second inner peripheral portion 43a and a second outer peripheral portion 43b. The second outer peripheral portion 43b is disposed radially outwards of the second inner peripheral portion 43a. The second outer peripheral portion 43b of the movable pulley member 43 has a curved shape, similarly to the first outer peripheral portion 42b of the immovable pulley member 42. On the other hand, the second inner peripheral portion 43a of the movable pulley member 43 has a flat shape, similarly to the first inner peripheral portion 42a of the immovable pulley member 42. Specifically, a slanted angle θ3 is set to be constant in at least a contact portion with the V-belt 39 in the second inner peripheral portion 43a. On the other hand, a slanted angle θ4 of the second outer peripheral portion 43b with respect to a plane perpendicular to the axis of the movable pulley member 43 is greater than the slanted angle θ3 of the second inner peripheral portion 43a with respect to the plane perpendicular to the axis of the movable pulley member 43.

It should be noted that the slanted angle θ2 at a given position on the first outer peripheral portion 42b refers to an angle formed by a tangential line at the given position on the first outer peripheral portion 42b and a plane perpendicular to the axis of the immovable pulley member 42. Similarly, the slanted angle θ4 at a given position on the second outer peripheral portion 43b refers to an angle formed by a tangential line at the give position on the second outer peripheral portion 43b and a plane perpendicular to the axis of the movable pulley member 43.

As illustrated in FIG. 9, one of the lateral surfaces of the coupling member 53 is faced to a boundary portion 42c between the first inner peripheral portion 42a and the first outer peripheral portion 42b when the reduction ratio of the CVT 30 is maximized. Similarly, the other of the lateral surfaces of the coupling member 53 is faced to a boundary portion 43c between the second inner peripheral portion 43a and the second outer peripheral portion 43b when the reduction ratio of the CVT 30 is maximized. More specifically, the boundary portion 42c between the first inner peripheral portion 42a and the first outer peripheral portion 42b is faced to the radial-directional center of the coupling member 53 (see a dashed-dotted line L1 depicted in FIGS. 6 and 9) in one of the lateral surfaces of the V-belt 39. Similarly, the boundary portion 43c between the second inner peripheral portion 43a and the second outer peripheral portion 43b is faced to the radial-directional center of the coupling member 53 (see the dashed-dotted line L1 depicted in FIGS. 6 and 9) in the other of the lateral surfaces of the V-belt 39. When the reduction ratio of the CVT 30 is thus maximized, whole lateral surfaces of the respective inner block portions 52b make contact with the immovable pulley member 42 and the movable pulley member 43 whereas whole lateral surfaces of the respective outer block portions 52a make n o contact with the immovable pulley member 42 and the movable pulley member 43.

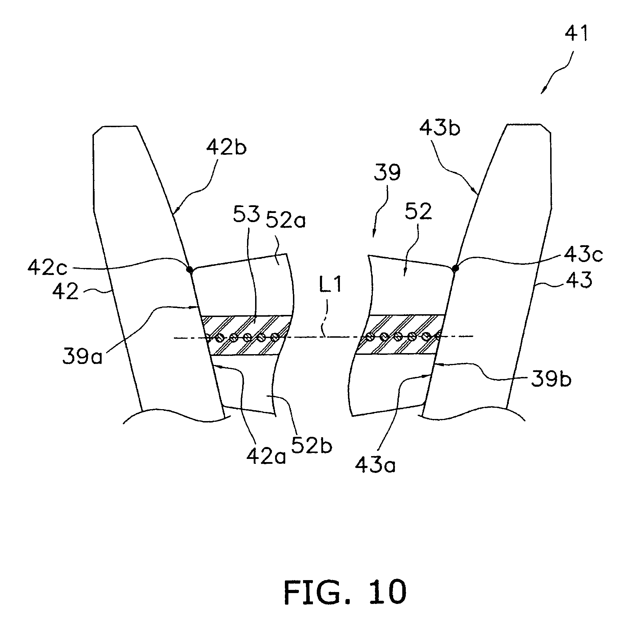

As described above, the reduction ratio of the CVT 30 is reduced in proportion to increase in the engine speed or the vehicle speed. In other words, the wrapping diameter of the V-belt 39 is reduced in the driven pulley 41. Therefore, the V-belt 39 is moved radially inwards compared to the position illustrated in FIG. 9. When the vehicle speed reaches V1 (see FIG. 8) at which the clutch 80 is completely engaged, the V-belt 39 is set to be in a state illustrated in FIG. 10. Specifically, one of the lateral surfaces of the V-belt 39 (hereinafter referred to as "a first lateral surface 39a") is entirely positioned radial inwards of the boundary portion 42c between the first inner peripheral portion 42a and the first outer peripheral portion 42b. Similarly, the other of the lateral surfaces of the V-belt 39 (hereinafter referred to as "a second lateral surface 39b") is entirely positioned radially inwards of the boundary portion 43c between the second inner peripheral portion 43a and the second outer peripheral portion 43b. When the clutch 80 is thus completely engaged from a disengaged state, the first lateral surface 39a of the V-belt 39 entirely makes contact with the first inner peripheral portion 42a, while the second lateral surface 39b of the V-belt 39 entirely makes contact with the second inner peripheral portion 43a. It should be noted that the V-belt 39 is set to be in a state illustrated in FIG. 10 when the vehicle speed reaches V 1 regardless of whether the relation between the engine speed and the vehicle speed varies along either the solid line L1a or the dashed line L1b in FIG. 8.

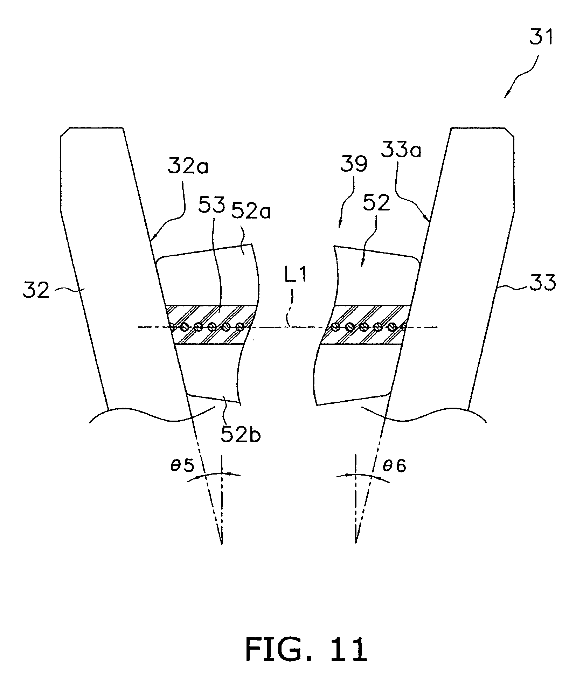

In the drive pulley 31, at least a contact portion with the V-belt 39 in the surface of the immovable pulley member 32 (hereinafter referred to as "a first contact surface 32a") has a flat shape as illustrated in FIG. 11. In other words, a slanted angle θ5 of the first contact surface 32a with respect to a plane perpendicular to the axis of the immovable pulley member 32 has a constant angle. Similarly, at least a contact portion with the V-belt 39 in the surface of the movable pulley member 33 (hereinafter referred to as "a second contact surface 33a") has a flat shape. In other words, a slanted angle θ6 of the second contact surface 33a with respect to a plane perpendicular to the axis of the movable pulley member 33 has a constant angle. It should be noted that FIG. 11 simplifies illustration of the immovable pulley member 32 and the movable pulley member 33 in the drive pulley 31.

According to the motorcycle 1 of the present exemplary embodiment, the contact areas are reduced between the surfaces of the driven pulley 41 and the resin blocks 52 of the V-belt 39 when the reduction ratio of the CVT 30 is maximized. Contact pressure is thereby increased between the surfaces of the driven pulley 41 and the resin blocks 52. Accordingly, stick-slip sounds can be inhibited from being produced in the driven pulley 41 when the reduction ratio of the CVT 30 is maximized.

Further, the reduction ratio of the CVT 30 is maximized when the engine 20 is set to be in an idling state. According to the present embodiment, stick-slip sounds can be inhibited from being produced in such a condition that a rider has high chances of hearing stick-slip sounds. In other words, it is possible to inhibit a rider's uncomfortable feeling to be aroused by stick-slip sounds.

Further, the inner peripheral portions 42a, 43a of the driven pulley 41 and the V-belt 39 make contact with each other during traveling of the vehicle. The lateral surfaces of the resin blocks 52 of the V-belt are thereby shaped to be matched with the shapes of the inner peripheral portions 42a, 43a even when the resin blocks 52 are abraded. In other words, the lateral surfaces of the resin blocks 52 are kept prevented from making contact with the outer peripheral portions 42b, 43b in the driven pulley 41. Therefore, stick-slip sounds can be inhibited from being produced even when the resin blocks 52 of the V-belt 39 are abraded.

Further, when the vehicle speed is greater than or equal to V1 at which the clutch 80 is completely engaged, the lateral surfaces of the V-belt 39 entirely make contact with the surfaces of the driven pulley 41. Therefore, large contact areas are ensured between the driven pulley 41 and the resin blocks 52 of the V-belt 39. Accordingly, the driven pulley 41 can reliably transmit torque to the driven shaft 27 at a high vehicle speed.

Further, the first and second contact surfaces 32a, 33a in the drive pulley 31 are flatly shaped. Large contact areas are thereby ensured between the drive pulley 31 and the resin blocks 52 regardless of the vehicle speed. Accordingly, the drive pulley 31 can reliably transmit torque from the crankshaft 21 to the V-belt 39.

Further, the surfaces of the driven pulley 41 are prevented from making contact with the outer block portions 52a but making contact with the coupling member 53 and the inner block portions 52b when the reduction ratio of the CVT 30 is maximized. This can inhibit contact areas from being extremely reduced and inhibit slippage of the V-belt 39 with respect to the driven pulley 41.

Further, each of the drive pulley 31 and the driven pulley 41 includes the groove 91 on the surface thereof. The grooves 91 keep abrasion powder produced from the V-belt 39 therein. This constantly achieves good lubrication between the V-belt 39 and the surfaces of the drive pulley 31 and between the V-belt 39 and the surfaces of the driven pulley 41. Moreover, the groove 91 on the driven pulley 41 may be a cause of producing stick-slip sounds. According to the motorcycle 1 of the present exemplary embodiment, however, the aforementioned shape of the surfaces of the driven pulley 41 can inhibit stick-slip sounds from being produced in the driven pulley 41.

Further, the grooves 91 are formed on the surface of the pulley 31 and the surface of the pulley 41 in a turning cutting process. Therefore, the grooves 91 can be easily formed at a low cost.

Further, in the driven pulley 41, the surface of the first outer peripheral portion 42b and the surface of the second outer peripheral portion 43b are curvedly shaped in a turning cutting process. Therefore, the surface of the first outer peripheral portion 42b and the surface of the second outer peripheral portion 43b are curvedly shaped simultaneously with or consecutively to cutting of the groove 91. Therefore, work efficiency can be enhanced in cutting of the driven pulley 41.

Further, the driven pulley 41 is made of stainless. Therefore, the shape of the grooves 91 and the curved shapes of the surfaces of the first and second outer peripheral portions 42b, 43b can be easily formed in a turning cutting process. In general, pulleys made of stainless have higher chances of producing stick-slip sounds compared to pulleys made of aluminum. According to the present exemplary embodiment, however, the driven pulley 41 made of stainless has a curvedly shaped surface. Stick-slip sounds can be inhibited from being produced in the driven pulley 41. In contrast, the drive pulley 31 made of aluminum is not curvedly shaped unlike the driven pulley 41. The driven pulley 31 can be thereby formed in a smaller number of working processing.

Further, the reduction ratio of the CVT 30 is maximized at high vehicle speed as described above. The weight roller 34 is configured to press the movable pulley member 33 with large force at high vehicle speed. Reduction in contact pressure is thereby small between the surfaces of the drive pulley 31 and the V-belt 39 even when contact areas are increased between the surfaces of the drive pulley 31 and the V-belt 39. In other words, chances are low that stick-slip sounds are produced in the drive pulley 31. Moreover, the drive pulley 31 is made of aluminum. This contributes to less chances of producing stick-slip sounds in the drive pulley 31. Yet further, even when stick-slip sounds are actually produced at the maximum reduction ratio of the CVT 30, a rider has less chances of hearing the stick-slip sounds at high vehicle speed. Therefore, a rider has less chances of arousing an uncomfortable feeling due to stick-slip sounds even when the drive pulley 31 does not have curved surfaces unlike the driven pulley 41.

The continuously variable transmission and the saddle ride-type vehicle according to the present invention are not limited to the aforementioned exemplary embodiment, and are allowed to be changed without departing from the scope of the present invention.

The saddle ride-type vehicle of the present invention is not limited to the motorcycle 1. Saddle ride-type vehicles of other types may be selected as the saddle ride-type vehicle of the present invention. For example, scooter-type vehicles may be selected as the saddle ride-type vehicle of the present invention. Alternatively, four-wheel-drive buggies such as all terrain vehicles (ATVs) may be selected as the saddle ride-type vehicle of the present invention.

Each surface of the driven pulley 41 may not be necessarily curved from a position thereon faced to the center of the coupling member 53 at the maximum reduction ratio. In other words, each of the boundary portions 42c, 43c may not be necessarily positioned to be faced to the center of the coupling member 53 at the maximum reduction ratio. For example, the boundary portions 42c, 43c may be positioned radial outwards or radial inwards of the center of the coupling member 53.

In the aforementioned exemplary embodiment, the surfaces of the driven pulley 41 may not be prevented from making contact with the entire outer block portions 52a when the wrapping diameter for the V-belt 39 is maximized in the driven pulley 41. For example, the surfaces of the driven pulley 41 may be prevented from making contact with a portion of the respective outer block portions 52a. Alternatively, the surfaces of the driven pulley 41 may be prevented from making contact partially with the coupling member 53, the outer block portions 52a and the inner block portions 52b. It should be noted that the V-belt 39 has high chances of slipping along the surfaces of the driven pulley 41 if contact areas are extremely reduced between the surfaces of the driven pulley 41 and the V-belt 39. It is therefore preferable to determine contact portions between the surfaces of the driven pulley 41 and the V-belt 39 for preventing slippage of the V-belt 39.

The grooves 91 may not be respectively formed on the surfaces of the drive pulley 31 and the surfaces of the driven pulley 41 in a turning cutting process. For example, the grooves 91 may be formed by means of any other suitable cutting methods such as grinding. However, it is preferable to form the grooves 91 in a turning cutting process from the perspective of easiness in cutting. Similarly, the surfaces of the driven pulley 41 may be curvedly shaped by means of grinding. However, it is preferable to curvedly shape the surfaces of the driven pulley 41 in a turning cutting process.

The grooves 91, formed on the surfaces of the drive pulley 31 and the surfaces of the driven pulley 41, may not be necessarily shaped in swirls. For example, a plurality of circular grooves may be concentrically formed about the axis of each of the pulley members 32, 33, 42 and 43. The grooves may not be formed on all of the pulley members 32, 33, 42 and 43. The grooves may be formed on some of the pulley members 32, 33, 42 and 43. For example, the groove may be formed on only one of the immovable pulley member 32 and the movable pulley member 33 in the drive pulley 31. The groove may be formed on only one of the immovable pulley member 42 and the movable pulley member 43 in the driven pulley 41.

The V-belt 39 may not be necessarily structured as described in the aforementioned exemplary embodiment. Any suitable structure can be applied to the V-belt 39 as long as the contact portions with the surfaces of the driven pulley 41 in the V-belt 39 are at least partially made of resin.

The driven pulley 41 may not be necessarily made of stainless. The driven pulley 41 may be made of any other steel related materials.

The slanted angle θ2 of the first outer peripheral portion 42b may be a constant angle. In other words, the first outer peripheral portion 42b may not be necessarily curvedly shaped but may be flatly shaped. Similarly, the slanted angle θ4 of the second outer peripheral portion 43b may be a constant angle. In other words, the second outer peripheral portion 43b may not be necessarily curvedly shaped but may be flatly shaped.

In the aforementioned exemplary embodiment, the boundary portion 42c of the immovable pulley member 42 is a boundary between the first inner peripheral portion 42a and the first outer peripheral portion 42b. In other words, the boundary portion 42c is positioned between a flat portion and a curved portion on the surface of the immovable pulley member 42. If the first outer peripheral portion 42b is flatly shaped, however, the boundary portion 42c is positioned between two flat portions with different slanted angles on the surface of the immovable pulley member 42. In this case, the boundary portion 42c is provided in a position that the slanted angle of the surface of the immovable pulley member 42 is changed. Similarly, the boundary portion 43c of the movable pulley member 43 is a boundary between the second inner peripheral portion 43a and the second outer peripheral portion 43b. In other words, the boundary portion 43c is positioned between a flat portion and a curved portion on the surface of the movable pulley member 43. If the second outer peripheral portion 43b is flatly shaped, however, the boundary portion 43c is positioned between two flat portions with different slanted angles on the surface of the movable pulley member 43. In this case, the boundary portion 43c is provided in a position that the slanted angle of the surface of the movable pulley member 43 is changed.

The first outer peripheral portion 42b may be formed at least partially on a portion of the surface of the immovable pulley member 42, i.e., a portion positioned radial outwards of the boundary portion 42c. In other words, the first outer peripheral portion 42b may be formed not entirely but partially on a portion positioned radial outwards of the boundary portion 42c in the surface of the immovable pulley member 42. For example, the first outer peripheral portion 42b may occupy a portion of the surface of the immovable pulley member 42, which ranges radially outwards from the boundary portion 42c at a radial dimension (i.e., height) corresponding to the radial length (i.e., height) of the resin blocks 52. When a slanted angle θ2 is assumed to be formed by a plane perpendicular to the axis of the immovable pulley member 42 and a tangential line at any given positions on the first outer peripheral portion 42b ranging radial outwards of the boundary portion 42c at the height of the resin blocks 52 on the surface of the immovable pulley member 42, the slanted angle θ2 is greater than the slanted angle θ1. Similarly, the second outer peripheral portion 43b may be formed at least partially on a portion of the surface of the movable pulley member 43, i.e., a portion positioned radial outwards of the boundary portion 43c. In other words, the second outer peripheral portion 43b may be formed not entirely but partially on a portion positioned radial outwards of the boundary portion 43c in the surface of the movable pulley member 43. For example, the second outer peripheral portion 43b may occupy a portion of the surface of the movable pulley member 43, i.e., a portion ranging radially outwards of the boundary portion 43c at a radial length (i.e., height) corresponding to the radial length (i.e., height) of the resin blocks 52. When the slanted angle θ4 is herein assumed to be formed by a plane perpendicular to the axis of the movable pulley member 43 and a tangential line at a given position on the second outer peripheral portion 43b ranging radial outwards of the boundary portion 43c at the height of the resin blocks 52 on the surface of the movable pulley member 43, the slanted angle θ4 is greater than the slanted angle θ3.

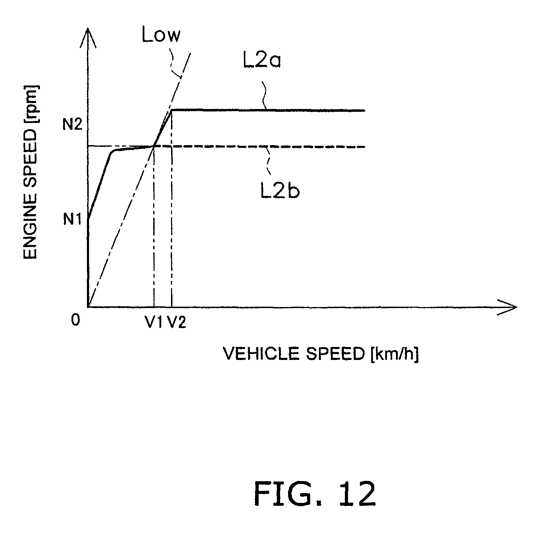

According to the aforementioned exemplary embodiment, the lateral surfaces of the V-belt 39 entirely make contact with the surfaces of the driven pulley 41 when the vehicle speed is greater than or equal to V 1 at which the clutch 80 is completely engaged as represented in FIG. 8. However, the lateral surfaces of the V-belt 39 may make contact only partially with the surfaces of the driven pulley 41 depending on the opening degree of the throttle in the engine 20 even when the vehicle speed is greater than or equal to V1. As represented in FIG. 12, for instance, the relation between the engine speed and the vehicle speed varies along a solid line L2a when the throttle is largely (e.g., maximally) opened. Specifically, the engine speed varies in same pattern as the aforementioned exemplary embodiment until the vehicle speed reaches V1. The state of the clutch 80 is also the same as that of the aforementioned exemplary embodiment. Therefore, the clutch 80 is completely engaged when the vehicle speed reaches V1. It should be noted in FIG. 12 that the engine speed roughly varies along a dashed-dotted line Low until the vehicle speed reaches V2 even when the vehicle speed is greater than or equal to V 1 and the CVT 30 is accordingly kept to be in a low speed state. In other words, the lateral surfaces of the V-belt 39 makes contact only partially with the surfaces of the driven pulley 41 until the vehicle speed reaches V2 even when the vehicle speed is greater than or equal to V 1 (see FIG. 9). When the vehicle speed is subsequently greater than or equal to V2, the CVT 30 is set to be in a high speed state. In other words, when the vehicle speed exceeds V1 and further becomes greater than or equal to V2, the lateral surfaces of the V-belt 39 entirely make contact with the surfaces of the driven pulley 41 (see FIG. 10). It is herein desirable that a difference between V1 and V2 is small. For example, the difference between V1 and V2 is less than or equal to half of V1. Further, the relation between the engine speed and the vehicle speed varies along a dashed line L2b in FIG. 12 when the throttle in the engine 20 is opened at a predetermined degree less than the maximum degree. In this case, the CVT 30 is set to be in a high speed state when the vehicle speed is greater than or equal to V1 as described in the aforementioned exemplary embodiment. Accordingly, the lateral surfaces of the V-belt 39 entirely make contact with the surfaces of the driven pulley 41 (see FIG. 10).

The present invention has an advantageous effect of inhibiting a rider's uncomfortable feeling to be aroused by stick-slip sounds. Therefore, the present invention is useful for the continuously variable transmissions and the saddle ride-type vehicles.

- 21: Crankshaft (Drive shaft)
- 31: Drive pulley
- 32: Immovable pulley member
- 33: Movable pulley member
- 27: Driven shaft
- 41: Driven pulley
- 42: Immovable pulley member
- 43: Movable pulley member
- 42a: First inner peripheral portion
- 42b: First outer peripheral portion
- 43a: Second inner peripheral portion
- 43b: Second outer peripheral portion
- 52: Resin block
- 39: V-belt
- 91: Groove
- 30: CVT (Continuously variable transmission)
- 53: Coupling member
- 52a: Outer block portion
- 52b: Inner block portion
- 1: Motorcycle (Saddle ride-type vehicle)
- 80: Clutch

## Claims

1. A continuously variable transmission (30), comprising:
a drive shaft (21);
a drive pulley (31) disposed onto the drive shaft (21);
a driven shaft (27) disposed away from the drive shaft (21);
a driven pulley (41) disposed onto the driven shaft (27), the driven pulley (41) including: a movable pulley member (43) configured to be movable along an axial direction of the driven shaft (27); and an immovable pulley member (42) configured to be immovable along the axial direction of the driven shaft (27); and
a V-belt (39) wrapped around the drive pulley (31) and the driven pulley (41), the V-belt (39) including a plurality of resin blocks (52) configured to make contact with the drive pulley (31) and the driven pulley (41),
wherein each of the movable pulley member (43) and the immovable pulley member (42) includes a surface configured to make contact with the V-belt (39),
the immovable pulley member (42) includes a first inner peripheral portion (42a) and a first outer peripheral portion (42b) disposed radially outwards of the first inner peripheral portion (42a), a slanted angle (θ2) of a surface of the first outer peripheral portion (42b) with respect to a plane perpendicular to an axis of the immovable pulley member (42) is greater than a slanted angle (θ1) of a surface of the first inner peripheral portion (42a) with respect to the plane perpendicular to the axis of the immovable pulley member (42),
the movable pulley member (43) includes a second inner peripheral portion (43a) and a second outer peripheral portion (43b) disposed radially outwards of the second inner peripheral portion (43a), a slanted angle (θ4) of a surface of the second outer peripheral portion (43b) with respect to a plane perpendicular to an axis of the movable pulley member (43) is greater than a slanted angle (θ3) of a surface of the second inner peripheral portion (43a) with respect to the plane perpendicular to the axis of the movable pulley member (43), and
the V-belt (39) includes a pair of a first lateral surface (39a) and a second lateral surface (39b),
**characterized in that**
the first lateral surface (39a) is configured to make contact with the first inner peripheral portion (42a) without making contact with the first outer peripheral portion (42b) at a maximum reduction ratio, and the second lateral surface (39b) is configured to make contact with the second inner peripheral portion (43a) without making contact with the second outer peripheral portion (43b) at the maximum reduction ratio.

2. The continuously variable transmission (30) according to claim 1, further comprising:
a clutch (80) configured to selectably allow or prevent torque transmission from the driven shaft (27),
wherein the clutch (80) is set to be in an engaged state from a disengaged state in proportion to increase in revolution speed of the driven shaft (27), and
the first lateral surface (39a) of the V-belt (39) entirely makes contact with the first inner peripheral portion (42a) and the second lateral surface (39b) of the V-belt (39) entirely makes contact with the second inner peripheral portion (43a) when the clutch (80) is set to be in a completely engaged state from the disengaged state.

3. The continuously variable transmission (30) according to claim 1 or 2,
wherein the drive pulley (31) includes: a movable pulley member (33) configured to be movable along an axis of the drive shaft (21); and an immovable pulley member (32) configured to be immovable along the axis of the drive shaft (21),
the immovable pulley member (32) of the drive pulley (31) includes a surface forming a constant slanted angle (θ5) with respect to a plane perpendicular to an axis of the immovable pulley member (32) of the drive pulley (31) at least in a portion thereof faced to the V-belt (39), and
the movable pulley member (33) of the drive pulley (31) includes a surface forming a constant slanted angle (θ6) with respect to a plane perpendicular to an axis of the movable pulley member (33) of the drive pulley (31) at least in a portion thereof faced to the V-belt (39).

4. The continuously variable transmission (30) according to any one of claims 1 to 3,
wherein the V-belt (39) further includes a coupling member (53) configured to couple the resin blocks (52),
each of the resin blocks (52) includes: an outer block portion (52a) disposed radially outwards of the coupling member (53) when the V-belt (39) is wrapped around the driven pulley (41); and an inner block portion (52b) disposed radially inwards of the coupling member (53) when the V-belt (39) is wrapped around the driven pulley (41), and
the driven pulley (41) is configured to be prevented from making contact at least partially with the outer block portion (52a)s at the maximum reduction ratio.

5. The continuously variable transmission (30) according to claim 4, wherein one of a pair of lateral surfaces of the coupling member (53) is configured to faced to a boundary portion (42c) between the first inner peripheral portion (42a) and the first outer peripheral portion (42b) and the other of the lateral surfaces of the coupling member (53) is faced to a boundary portion (43c) between the second inner peripheral portion (43a) and the second outer peripheral portion (43b) at the maximum reduction ratio.

6. The continuously variable transmission (30) according to claim 4, wherein the driven pulley (41) is configured to make contact with the inner block portions (52b) at the maximum reduction ratio.

7. The continuously variable transmission (30) according to any one of claims 1 to 6,
wherein the first outer peripheral portion (42b) includes a curved shape for radial-outwardly increasing the slanted angle with respect to the plane perpendicular to the axis of the immovable pulley member (42), and
the second outer peripheral portion (43b) includes a curved shape for radial-outwardly increasing the slanted angle with respect to the plane perpendicular to the axis of the movable pulley member (43).

8. The continuously variable transmission (30) according to any one of claims 1 to 7, wherein at least one of the surface of the movable pulley member (43) of the driven pulley (41) and the surface of the immovable pulley member (42) of the driven pulley (41) includes a single or plurality of grooves (91) extended in a circumferential direction thereof.

9. The continuously variable transmission (30) according to claim 8, wherein the groove (91) on the driven pulley (41) is formed in a turning cutting process.

10. The continuously variable transmission (30) according to any one of claims 1 to 9, wherein the first outer peripheral portion (42b) and the second outer peripheral portion (43b) of the driven pulley (41) are formed in a turning cutting process.

11. The continuously variable transmission (30) according to any one of claims 1 to 10, wherein the driven pulley (41) is made of a steel or a steel related material.

12. A saddle ride-type vehicle comprising the continuously variable transmission (30) according to any one of claims 1 to 11.

## Patentansprüche

1. Stufenlos veränderbares Getriebe (30), aufweisend:
eine Antriebswelle (21);
eine Antriebsriemenscheibe (31), angeordnet auf der Antriebswelle (21);
eine Abtriebswelle (27), angeordnet entfernt von der Antriebswelle (21);
eine Abtriebsriemenscheibe (41), angeordnet auf der Abtriebswelle (27), wobei die Abtriebsriemenscheibe (41) enthält: ein bewegbares Riemenscheibenteil (43), konfiguriert, entlang einer axialen Richtung der Abtriebswelle (27) bewegbar zu sein; und eine nicht- bewegbares Riemenscheibenteil (42), konfiguriert, entlang der axialen Richtung der Abtriebswelle (27) nicht bewegbar zu sein; und
einen Keilriemen (39), rund um die Antriebsriemenscheibe (31) und die Abtriebsriemenscheibe (41) geschlungen, wobei der Keilriemen (39) eine Mehrzahl von Kunststoffblöcken (52) enthält, konfiguriert, einen Kontakt mit der Antriebsriemenscheibe (31) und der Abtriebsriemenscheibe (41) herzustellen,
wobei jedes von dem bewegbaren Riemenscheibenteil (43) und dem nicht- bewegbaren Riemenscheibenteil (42) eine Oberfläche enthält, konfiguriert, einen Kontakt mit dem Keilriemen (39) herzustellen,
das nicht- bewegbare Riemenscheibenteil (42) einen ersten inneren Umfangsabschnitt (42a) und einen ersten äußeren Umfangsabschnitt (42b), angeordnet radial außerhalb des ersten inneren Umfangsabschnittes (42a), enthält, wobei ein geneigter Winkel (θ2) einer Oberfläche des ersten äußeren Umfangsabschnittes (42b) in Bezug auf eine Ebene, rechtwinklig zu einer Achse des nicht- bewegbares Riemenscheibenteils (42), größer ist als ein geneigter Winkel (θ1) einer Oberfläche des ersten inneren Umfangsabschnittes (42a) in Bezug auf die Ebene, rechtwinklig zu der Achse des nicht- bewegbaren Riemenscheibenteil (42), das bewegbare Riemenscheibenteil (43) einen zweiten inneren Umfangsabschnitt (43a) und einen zweiten äußeren Umfangsabschnitt (43b), angeordnet radial außerhalb des zweiten inneren Umfangsabschnittes (43a), enthält, wobei ein geneigter Winkel (θ4) einer Oberfläche des zweiten äußeren Umfangsabschnittes (43b) in Bezug auf eine Ebene, rechtwinklig zu einer Achse des bewegbaren Riemenscheibenteils (42), größer ist als ein geneigter Winkel (θ3) einer Oberfläche des zweiten inneren Umfangsabschnittes (43a) in Bezug auf die Ebene,
rechtwinklig zu der Achse des bewegbaren Riemenscheibenteil (43), und
der Keilriemen (39) ein Paar einer ersten seitlichen Oberfläche (39a) und ein Paar einer zweiten seitlichen Oberfläche (39b) enthält,
**dadurch gekennzeichnet, dass**
die erste seitliche Oberfläche (39a) konfiguriert ist, einen Kontakt mit dem ersten inneren Umfangsabschnitt (42a) herzustellen, ohne mit dem ersten äußeren Umfangsabschnitt (42b) bei einem maximalen Untersetzungsverhältnis in Kontakt zu kommen, und die zweite seitliche Oberfläche (39b) konfiguriert ist, einen Kontakt mit dem zweiten inneren Umfangsabschnitt (43a) herzustellen, ohne mit dem zweiten äußeren Umfangsabschnitt (43b) bei dem maximalen Untersetzungsverhältnis in Kontakt zu kommen.

2. Stufenlos veränderbares Getriebe (30) nach Anspruch 1, außerdem aufweisend:
eine Kupplung (80), konfiguriert, wahlweise eine Drehmomentübertragung von der Abtriebswelle (27) zu gestatten oder zu verhindern,
wobei die Kupplung (80) festgelegt ist, in einem In- Eingriffszustand von einem Außer- Eingriffszustand zu sein, um im Verhältnis zur Zunahme der Drehzahl der Abtriebswelle (27) zu erhöhen, und
wobei die erste seitliche Oberfläche (39a) des Keilriemens (39) vollständig einen Kontakt mit dem ersten inneren Umfangsabschnitt (42a) herstellt und die zweite seitliche Oberfläche (39b) des Keilriemens (39) vollständig einen Kontakt mit dem zweiten inneren Umfangsabschnitt (43a) herstellt, wenn die Kupplung (80) festgelegt ist, in einem vollständigen In- Eingriffszustand aus dem Außer- Eingriffszustand zu sein.

3. Stufenlos veränderbares Getriebe (30) nach Anspruch 1 oder 2,
wobei die Antriebsriemenscheibe (31) enthält: ein bewegbares Riemenscheibenteil (43), konfiguriert, entlang einer Achse der Antriebswelle (21) bewegbar zu sein; und ein nicht- bewegbares Riemenscheibenteil (32), konfiguriert, entlang der Achse der Antriebswelle (21) nicht bewegbar zu sein,
wobei das nicht- bewegbare Riemenscheibenteil (32) der Antriebsriemenscheibe (31) eine Oberfläche enthält, die einen konstant geneigten Winkel (θ5) in Bezug auf eine Ebene rechtwinklig zu einer Achse des nicht- bewegbaren Riemenscheibenteils (32) der Antriebsriemenscheibe (31) zumindest in einem Abschnitt derselben enthält, der dem Keilriemen (39) zugewandt ist, und
das bewegbare Riemenscheibenteil (33) der Antriebsriemenscheibe (31) eine Oberfläche enthält, die einen konstant geneigten Winkel (θ6) in Bezug auf eine Ebene rechtwinklig zu einer Achse des bewegbaren Riemenscheibenteils (33) der Antriebsriemenscheibe (31) zumindest in einem Abschnitt derselben enthält, der dem Keilriemen (39) zugewandt ist.

4. Stufenlos veränderbares Getriebe (30) nach einem der Ansprüche 1 bis 3,
wobei der Keilriemen (39) außerdem ein Kupplungsteil (53) enthält, konfiguriert, die Kunststoffblöcke (52) zu kuppeln,
wobei jeder der Kunststoffblöcke (52) enthält: einen äußeren Blockabschnitt (52a), angeordnet radial außerhalb des Kupplungsteils (53), wenn der Keilriemen (39) rund um die Abtriebsriemenscheibe (41) geschlungen ist; und einen inneren Blockabschnitt (52b), angeordnet radial innerhalb des Kupplungsteiles (53), wenn der Keilriemen (39) rund um die Abtriebsriemenscheibe (41) geschlungen ist, und die Abtriebsriemenscheibe (41) konfiguriert ist, am zumindest teilweisen In- Kontakt- Kommen mit dem äußeren Blockabschnitt (52) bei dem maximalen Untersetzungsverhältnis gehindert ist.

5. Stufenlos veränderbares Getriebe (30) nach Anspruch 4, wobei eines von einem Paar von seitlichen Oberflächen des Kupplungsteiles (53) konfiguriert ist, sich einem Grenzabschnitt (42c) zwischen dem ersten inneren Umfangsabschnitt (42a) und dem ersten äußeren Umfangsabschnitt (42b) zugewandt zu sein und die anderen der seitlichen Oberflächen des Kupplungsteiles (53) einem Grenzabschnitt (43c) zwischen dem zweiten inneren Umfangsabschnitt (43a) und dem zweiten äußeren Umfangsabschnitt (43b) bei dem maximalen Reduzierungsverhältnis zugewandt sind.

6. Stufenlos veränderbares Getriebe (30) nach Anspruch 4, wobei die Abtriebsriemenscheibe (41) konfiguriert ist, einen Kontakt mit den inneren Blockabschnitten (52b) bei dem maximalen Reduzierungsverhältnis herzustellen.

7. Stufenlos veränderbares Getriebe (30) nach einem der Ansprüche 1 bis 6, wobei der erste äußere Umfangsabschnitt (42b) eine gekrümmte Form enthält, um radial nach außen den geneigten Winkel in Bezug auf die Ebene rechtwinklig zu der Achse des nicht- bewegbaren Riemenscheibenteils (42) zu erhöhen, und der zweite äußere Umfangsabschnitt (43b) eine gekrümmte Form enthält, um radial nach außen den geneigten Winkel in Bezug auf die Ebene rechtwinklig zu der Achse des bewegbaren Riemenscheibenteils (43) zu erhöhen.

8. Stufenlos veränderbares Getriebe (30) nach einem der Ansprüche 1 bis 7, wobei zumindest einer von der Oberfläche des bewegbares Riemenscheibenteils (43) der Abtriebsriemenscheibe (41) oder Oberfläche des nicht- bewegbaren Riemenscheibenteils (42) der Abtriebsriemenscheibe (41) eine einzelne oder eine Mehrzahl von Nuten (91), erstreckt in einer Umfangsrichtung derselben, enthält.

9. Stufenlos veränderbares Getriebe (30) nach Anspruch 8, wobei die Nut (91) der Abtriebsriemenscheibe (41) in einem Verfahren des Drehschneidens gebildet wird.

10. Stufenlos veränderbares Getriebe (30) nach einem der Ansprüche 1 bis 9, wobei der erste äußere Umfangsabschnitt (42b) und der zweite äußere Umfangsabschnitt (43b) der Abtriebsriemenscheibe (41) in einem Verfahren des Drehschneidens gebildet werden.

11. Stufenlos veränderbares Getriebe (30) nach einem der Ansprüche 1 bis 10, wobei die Abtriebsriemenscheibe (41) aus einem Stahl oder stahlverwandtem Material hergestellt ist.

12. Fahrzeug vom Grätschsitz- Typ, aufweisend das stufenlos veränderbare Getriebe (30) nach einem der Ansprüche 1 bis 11.

## Revendications

1. Transmission à variation continue (30) comprenant :
un arbre de transmission (21) ;
une poulie d'entraînement (31) disposée sur l'arbre de transmission (21) ;
un arbre mené (27) disposé à distance de l'arbre de transmission (21) ;
une poulie menée (41) disposée sur l'arbre mené (27), la poulie menée (41) comprenant : un élément poulie mobile (43) conçu pour pouvoir se déplacer le long d'une direction axiale de l'arbre mené (27) ; et un élément poulie fixe (42) conçu pour être fixe le long de la direction axiale de l'arbre mené (27) ; et
une courroie trapézoïdale (39) entourée autour de la poulie d'entraînement (31) et de la poulie menée (41), la courroie trapézoïdale (39) comprenant une pluralité de blocs en résine (52) conçus pour venir en contact avec la poulie d'entraînement (31) et la poulie menée (41),
dans laquelle l'élément poulie mobile (43) et l'élément poulie fixe (42) comprennent chacun une surface conçue pour venir en contact avec la courroie trapézoïdale (39),
l'élément poulie fixe (42) comprend une première partie périphérique intérieure (42a) et une première partie périphérique extérieure (42b) disposées radialement vers l'extérieur de la première partie périphérique intérieure (42a), un angle incliné (82) d'une surface de la première partie périphérique extérieure (42b) relativement à un plan perpendiculaire à un axe de l'élément poulie fixe (42) est supérieur à un angle incliné (θ1) de la surface de la première partie périphérique intérieure (42a) relativement au plan perpendiculaire à l'axe de l'élément poulie fixe (42), l'élément poulie mobile (43) comprend une seconde partie périphérique intérieure (43a) et une seconde partie périphérique extérieure (43b) disposées radialement vers l'extérieur de la seconde partie périphérique intérieure (43a), un angle incliné (θ4) d'une surface de la seconde partie périphérique extérieure (43b) relativement à un plan perpendiculaire à un axe de l'élément poulie mobile (43) est supérieur à un angle incliné (θ3) d'une surface de la seconde partie périphérique intérieure (43a) relativement au plan perpendiculaire à l'axe de l'élément poulie mobile (43), et
la courroie trapézoïdale (39) comprend une paire constituée d'une première surface latérale (39a) et d'une seconde surface latérale (39b),
**caractérisée en ce que**
la première surface latérale (39a) est conçue pour venir en contact avec la première partie périphérique intérieure (42a) sans venir en contact avec la première partie périphérique extérieure (42b) à un rapport de réduction maximal, et la seconde surface latérale (39b) est conçue pour venir en contact avec la seconde partie périphérique intérieure (43a) sans venir en contact avec la seconde partie périphérique extérieure (43a) au rapport de réduction maximal.

2. Transmission à variation continue (30) conformément à la revendication 1 comprenant en outre :
un embrayage (80) conçu pour au choix permettre ou éviter une transmission de couple à partir de l'arbre mené (27),
dans laquelle l'embrayage (80) est réglé pour être dans un état enclenché à partir d'un état désenclenché proportionnellement à l'augmentation de la vitesse de rotation de l'arbre mené (27), et
la première surface latérale (39a) de la courroie trapézoïdale (39) vient entièrement en contact avec la première partie périphérique intérieure (42a) et la seconde surface latérale (39b) de la courroie trapézoïdale (39) vient entièrement en contact avec la seconde partie périphérique intérieure (43a) lorsque l'embrayage (80) est réglé pour être dans un état complètement enclenché à partir de l'état désenclenché.

3. Transmission à variation continue (30) conformément à la revendication 1 ou 2,
dans laquelle la poulie d'entraînement (31) comprend : un élément poulie mobile (33) conçu pour être mobile le long d'un axe de l'arbre de transmission (21) ; et un élément poulie fixe (32) conçu pour être fixe le long de l'axe de l'arbre de transmission (21),
l'élément poulie fixe (32) de la poulie d'entraînement (31) comprend une surface formant un angle incliné constant (θ5) relativement à un plan perpendiculaire à un axe de l'élément poulie fixe (32) de la poulie d'entraînement (31) au moins dans une partie en regard de la courroie trapézoïdale (39), et
l'élément poulie mobile (33) de la poulie d'entraînement (31) comprend une surface formant un angle incliné constant (θ6) relativement à un plan perpendiculaire à un axe de l'élément poulie mobile (33) de la poulie d'entraînement (31) au moins dans une partie en regard de la courroie trapézoïdale (39).

4. Transmission à variation continue (30) conformément à l'une quelconque des revendications 1 à 3,
dans laquelle la courroie trapézoïdale (39) comprend en outre un élément d'accouplement (53) conçu pour l'accouplement des blocs de résine (52),
chacun des blocs de résine (52) comprend : une partie bloc extérieur (52a) disposée radialement vers l'extérieur de l'élément d'accouplement (53) lorsque la courroie trapézoïdale (39) est entourée autour de la poulie menée (41) ; et une partie bloc intérieur (52b) disposée radialement vers l'intérieur de l'élément d'accouplement (53) lorsque la courroie trapézoïdale (39) est entourée autour de la poulie menée (41), et la poulie menée (41) est conçue pour qu'elle évite de venir en contact au moins en partie avec la partie bloc extérieur (52a) au rapport de réduction maximal.

5. Transmission à variation continue (30) conformément à la revendication 4, dans laquelle une surface parmi deux surfaces latérales de l'élément d'accouplement (53) est conçue pour être en regard d'une partie limite (42c) entre la première partie périphérique intérieure (42a) et la première partie périphérique extérieure (42b), et l'autre des surfaces latérales de l'élément d'accouplement (53) est en regard d'une partie limite (43c) entre la seconde partie périphérique intérieure (43a) et la seconde partie périphérique extérieure (43b) au rapport de réduction maximal.

6. Transmission à variation continue (30) conformément à la revendication 4, dans laquelle la poulie menée (41) est conçue pour venir en contact avec les parties bloc intérieur (52b) au rapport de réduction maximal.

7. Transmission à variation continue (30) conformément à l'une quelconque des revendications 1 à 6, dans laquelle la première partie périphérique extérieure (42b) comprend une forme incurvée pour augmenter radialement vers l'extérieur l'angle incliné relativement au plan perpendiculaire à l'axe de l'élément poulie fixe (42), et
la seconde partie périphérique extérieure (43b) comprend une forme incurvée pour augmenter radialement vers l'extérieur l'angle incliné relativement au plan perpendiculaire à l'axe de l'élément poulie mobile (43).

8. Transmission à variation continue (30) conformément à l'une quelconque des revendications 1 à 7, dans laquelle la surface de l'élément poulie mobile (43) de la poulie menée (41) et/ou la surface de l'élément poulie fixe (42) de la poulie menée (41) comprend/comprennent une seule rainure ou une pluralité de rainures (91) qui s'étend(ent) dans une direction circonférentielle.

9. Transmission à variation continue (30) conformément à la revendication 8, dans laquelle la rainure (91) ménagée sur la poulie menée (41) est formée lors d'un procédé de découpage rotatif.

10. Transmission à variation continue (30) conformément à l'une quelconque des revendications 1 à 9, dans laquelle la première partie périphérique extérieure (42b) et la seconde partie périphérique extérieure (43b) de la poulie menée (41) sont formées lors d'un procédé de découpage rotatif.

11. Transmission à variation continue (30) conformément à l'une quelconque des revendications 1 à 10, dans laquelle la poulie menée (41) est constituée d'un acier ou d'un matériau apparenté à l'acier.

12. Véhicule du type à enfourcher comprenant la transmission à variation continue (30) conformément à l'une quelconque des revendications 1 à 11.
